Europäisches Patentamt

European Patent Office

Office européen des brevets

(19)

(11) **EP 0 663 765 B1**

(12) **EUROPEAN PATENT SPECIFICATION**

(45) Date of publication and mention
of the grant of the patent:
**01.09.1999 Bulletin 1999/35**

(51) Int Cl.$^6$: **H04N 5/21**

(21) Application number: **95100027.2**

(22) Date of filing: **02.01.1995**

(54) **Channel interface apparatus for improving convergence speed of a least mean squared adaptive equalizer**

Kanalschnittstelleneinrichtung zum Verbessern der Konvergenzgeschwindigkeit eines adaptiven Entzerrers nach dem Verfahren des kleinsten quadratischen Fehlers

Dispositif interface de canal pour améliorer la vitesse de convergence d'un égalisateur adaptatif sélon le procédé à erreur quadratique minimale

| | |
|---|---|
| (84) Designated Contracting States:<br>**DE FR GB NL** | (74) Representative:<br>**von Samson-Himmelstjerna, Friedrich R.,<br>Dipl.-Phys. et al<br>SAMSON & PARTNER<br>Widenmayerstrasse 5<br>80538 München (DE)** |
| (30) Priority: **18.01.1994 KR 9400781** | |
| (43) Date of publication of application:<br>**19.07.1995 Bulletin 1995/29** | (56) References cited:<br>**EP-A- 0 096 943       EP-A- 0 413 460<br>EP-A- 0 430 531       EP-A- 0 466 500<br>GB-A- 2 225 199       US-A- 3 593 142<br>US-A- 5 060 067       US-A- 5 065 242** |
| (73) Proprietor: **DAEWOO ELECTRONICS CO., LTD<br>Jung-Gu, Seoul 100-095 (KR)** | |
| (72) Inventor: **Song, Gang-Woog<br>Seodaemoon-Ku, Seoul (KR)** | • **IEEE TRANSACTIONS ON CONSUMER ELECTRONICS, vol.25, no.2, 28 February 1979, NEW YORK US pages 9 - 44 CICIORA W. ET AL 'A TUTORIAL ON GHOST CANCELLING IN TELEVISION SYSTEMS'** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

The present invention relates to a digital communication system; and, more particularly, to a channel interface apparatus for use in the digital communication system employing a Least Mean Squared(LMS) adaptive equalizer, which is capable of improving the convergence speed of the LMS adaptive equalizer.

### Description of the Prior Art

In a high definition television (HDTV) system as an example for a digital communication system, television signals from a television signal transmission source are transmitted over a transmission channel such as radio channel to a HDTV signal receiving end. One of the inherent problems associated with the transmission of television signals over the transmission channel is that channel distortions and additive noises tend to disrupt, e.g., data symbols contained in the transmitted television signal, thereby adversely affecting the ability of the HDTV signal receiving system to distinguish the received symbol levels. To ameliorate this problem, a typical HDTV signal receiving system includes a channel adaptive equalizer.

Such a prior art channel adaptive equalizer employs a filtering device that removes from a received signal the amplitude and phase distortions resulting from, e.g., a frequency dependent time-variant response of the transmission channel, to thereby provide an improved symbol decision capability. Specifically, the channel adaptive equalizer emulates the transfer function of the transmission channel and applies the inverse of the transfer function to the received signal so as to rectify the associated time dependent distortion effects. However, it is rather difficult to accurately define the transfer function of the transmission channel which is unstable and varies with such parameters as temperature, environmental and geographical factors and the like. Therefore, in order to accurately define the transfer function of the transmission channel, the adaptive equalizer periodically employs a known reference signal called a training sequence.

One of such equalizers is disclosed in J. G. Proakis, "Digital Communication", McGraw-Hill, pp. 561-584 (1989). This adaptive equalizer employs a LMS algorithm and has a conventional digital filter and a coefficient updating circuit which updates its filter coefficients called tap coefficients through the use of an equalized reference signal and a replica of the reference signal pre-stored therein. The filter coefficients are adjusted to minimize a mean square error (MSE) between the equalized reference signal and the reference signal to thereby converge on a set of optimum filter coefficients, wherein the transfer function of the optimum filter coefficients approaches the inverse of the transfer function of the transmission channel. That results in an equalized television signal which approximates the transmitted television signal.

Such prior art methods as the LMS algorithm take hundreds of iterations to converge on a set of optimum filter coefficients, requiring a long adaption period to attain an accurate transfer function. The penalty for a long adaption period is that the communication channel will remain closed while the equalizer is adapting. Furthermore, HDTV systems operate at greater transmission speeds requiring higher bandwidths, which in turn demand ever more complex filters with much longer convergence times.

In the EP-A-0 096 943 a channel adaptive equalizer is described which automatically adapts itself to a transmission channel to minimize an interference of subsequent digital signals. For this purpose, the filter coefficients of a digital filter comprised in the channel adaptive equalizer are adjusted such that the impulse response of the transmission channel is zero at predetermined instants.

### Summary of the Invention

It is, therefore, a primary object of the present invention to provide an apparatus to effectively increase the convergence speed of an adaptive equalizer employing a Least Mean Squared algorithm.

In accordance with the present invention, there is provided a digital communication system having a transmitter for transmitting a digitally encoded signal and a reference signal via a transmission channel, and a receiver including an adaptive equalizer employing a Least Mean Squared algorithm, wherein said transmitter comprises: channel interface means coupled to the transmission channel for multiplying the digitally encoded signal or the reference signal with the inverse of a mean transfer function of the transmission channel, to thereby produce a modified signal to be transmitted.

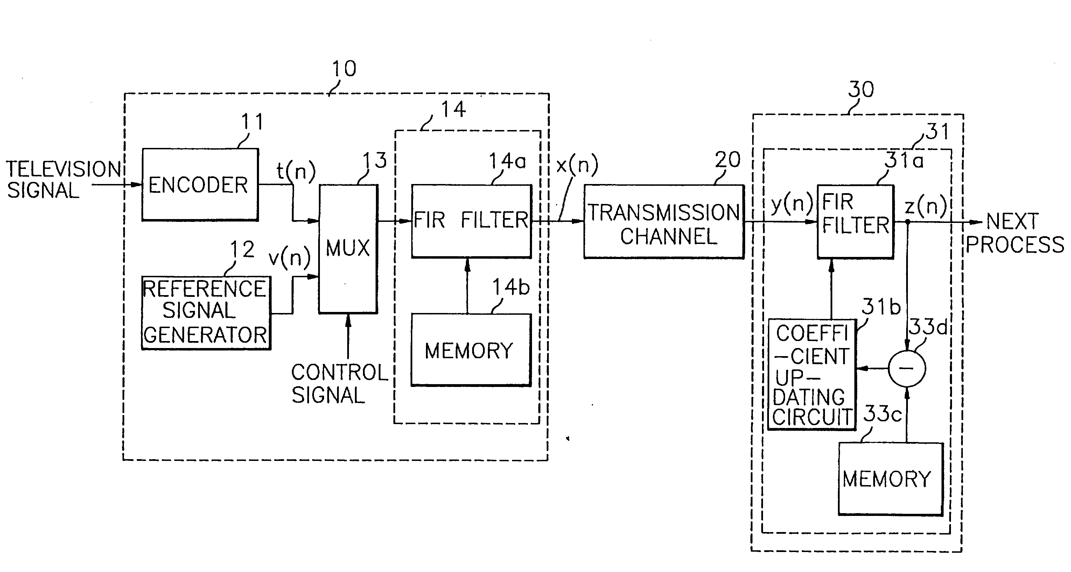

### Brief Description of the Drawing

The above and other objects and features of the instant invention will become apparent from the following description of preferred embodiments taken in conjunction with the accompanying drawing, which is a schematic block diagram of a HDTV system employing a channel interface apparatus in accordance with the present invention.

Detailed Description of the Preferred Embodiments

Referring to the drawing, there is shown a part of a HDTV system employing a channel interface apparatus in accordance with the present invention. The HDTV system includes a HDTV signal transmitter 10, a HDTV signal receiver 30, and a transmission channel 20 interposed therebetween.

The HDTV signal transmitter 10 is provided with an encoder 11, a reference signal generator 12, a multiplexer 13 and a channel interface circuit 14.

The encoder 11 receives a television signal including image, audio, and synchronizing information and to convert it to a digital television signal $t(n)$ to be transmitted.

The reference signal generator 12 serves to generate a reference signal $v(n)$ which is applied selectively via the transmission channel to the HDTV signal receiver 30. At the HDTV signal receiver 30, the reference signal $v(n)$, also called a training sequence, is used to emulate the transfer function $H(z)$ of the transmission channel 20 and to apply the inverse of the transfer function to the received television signal so as to rectify the time dependent distortion effects associated with the transfer function $H(z)$ of the transmission channel 20. As is well known in the art, a pseudo noise sequence or a Bessel-type pulse is advantageously employed as the reference signal.

The digital television signal $t(n)$ and the reference signal $v(n)$ are coupled to the multiplexer 13 which serves to selectively couple the reference signal $v(n)$ or the digital television signal $t(n)$ to the channel interface circuit 40 in response to a control signal from a conventional controller(not shown).

The channel interface circuit 40 serves to receive the digital television signal $t(n)$ or the reference signal $v(n)$ and to modify the digital television signal or the reference signal by using its transfer function $R(z)$ to produce a modified signal $x(n)$. As will be described below, the transfer function $R(z)$ of the channel interface circuit 14 is identical to the inverse of a mean transfer function $M(z)$ of the transmission channel 20 which is experimentally determined by using conventional autocorrelation or adaptive filtering techniques. As shown, the channel interface circuit 14 is provided with a finite impulse response(FIR) filter 14a and a memory for storing a set of filter coefficients. The set of filter coefficients is pre-selected to define the transfer function $R(z)$ and stored in the memory 14b. Therefore, the FIR filter serves to filter the digital television signal $t(n)$ or the reference signal $v(n)$ by using the set of filter coefficients stored in the memory 14b in order to produce the modified signal $x(n)$ which may be distorted by the transmission channel 20 having the transfer function $H(z)$. The transmission channel 20 provides a channel output signal $y(n)$ to the HDTV signal receiver 30.

The HDTV signal receiver 30 includes an equalizer for correcting a received television signal from the transmission channel 20 and produces an equalized television signal which approximates the original television signal. The adaptive equalizer 31 employing a LMS algorithm has a conventional FIR filter 31a and a coefficient updating circuit 31b which updates the filter coefficients thereof by using a filter output signal $z(n)$ and a replica of the reference signal $v(n)$ stored in a memory 33. The adaptive equalizer 31 serves to minimize the mean square error (MSE) between the filter output signal and the prestored reference signal, thereby converging on a set of optimum filter coefficients that result in a filter output signal $z(n)$ which approximates the reference signal $v(n)$.

To obtain the set of optimum filter coefficients for the FIR filter 31a, the reference signal $v(n)$ is coupled through a multiplexer 13 to the FIR filter 14a, wherein the reference signal $v(n)$ is filtered and modified by using the preselected set of filter coefficients defining the transfer function $R(z)$ of the channel interface circuit 14 to produce a modified reference signal $x(n)$. The transfer function $R(z)$ is identical to the inverse of the mean transfer function $M(z)$. Assuming that measured transfer functions of the transmission channel 20 are $H_0(z), H_1(z), \ldots, H_{N-1}(z)$, the mean z-domain transfer function $M(z)$ may be represented as follows:

$$M(z) = \frac{1}{N} \sum_{n=0}^{N-1} H_n(z) \qquad \cdots\cdots\cdots\cdots\cdots (1)$$

wherein $N$ is a positive integer representing the total number of samples taken.

Therefore, since the channel interface circuit 14 includes the FIR filter 14a, the z-domain modified reference signal $X(z)$ may be represented as follows:

$$X(z) = R(z)\ V(z) = \frac{1}{M(z)}\ V(z) \qquad\qquad (2)$$

wherein $V(z)$ is the z-domain reference signal.

The modified reference signal $x(n)$ is then coupled to the transmission channel 20 and is subjected to distortion by the transmission channel 20 having a z-domain channel transfer function $H(z)$ so that the transmission channel 20 produces a channel output signal $y(n)$. Accordingly, the z-domain channel output signal $Y(z)$ is represented as follows:

$$Y(z) = H(z)X(z) = \frac{H(z)}{M(z)}\ V(z) = \frac{(M(z)+\Delta H(z))}{M(z)}\ V(z) = \frac{\Delta H(z)}{M(z)}\ V(z) \qquad (3)$$

wherein $H(z)$ is the actual z-domain transfer function of the transmission channel 20 and may be represented as $H(z) = M(z) + \Delta H(z)$; $\Delta H(z)$ is the differential transfer function between the channel transfer function $H(z)$ and the mean transfer function $M(z)$. As can be seen from Eq. (1), the distortion of the original reference signal $v(n)$ may be represented as $\Delta H(z)/M(z)$; and, the effective channel transfer function $H'(z)$ becomes $\Delta H(z)/M(z)$. Further, it should be noted that since the differential transfer function $\Delta H(z)$ is divided by the mean transfer function $M(z)$, the variance of the effective channel transfer function $\Delta H(z)/M(z)$ is smaller than that of the actual channel transfer function $H(z)$.

The channel output signal $y(n)$ is then coupled to the adaptive equalizer 31 and is filtered by the FIR filter 31a to correct the channel output signal $y(n)$ and produce a filter output signal $z(n)$ that best approximates the reference signal $v(n)$. The filter output signal $z(n)$ may be represented as follows:

$$z(n) = \sum_{i=0}^{M-1} w_i\ y(n-i) \qquad \ldots\ldots\ldots (4)$$

wherein $w_i$ is a vector of filter coefficients for the equalizer; and $M$ is a positive integer representing the number of the filter cells. The z-domain transfer function $W(z)$ of the filter coefficients $\{w_i\}$ are represented as follows:

$$W(z) = \sum_{i=0}^{\infty} w_i\ z^{-1} = \frac{1}{H'(z)} \qquad \ldots (5)$$

To emulate the effective channel transfer function $H'(z)$, the filter coefficients $w(n)$ are iteratively updated by using a coefficient updating circuit 31b as follows:

$$w(n+1) = w(n) + \mu y(n)(v(n)-z(n)) \qquad\qquad (6)$$

wherein $\mu$ is a small positive integer. Therefore, the performance of the LMS equalizer is characterized by its means square error(MSE) which is obtained at a subtraction circuit 33d. That is, the adaptive equalizer operates to minimize the MSE, thereby converging on the optimum set of filter coefficients $w(n)$ wherein the LMS algorithm is used to adjust the filter coefficients until they converge on values that minimize the mean square error.

As is well known in the art, in the adaptive equalizer based on the LMS algorithm, the convergence speed is determined by the covariance matrix of the channel output signal $y(n)$. That is, as the eigenvalue spread of the covariance matrix is close to unity, the convergence rate becomes fast, and becomes the fastest when the channel output signal is white.

As maybe seen from Eq. (3), since the reference signal $v(n)$ is white, the covariance matrix of the channel output signal $y(n)$ is mainly related to the variance of the effective channel transfer function $\Delta H(z)/M(z)$, which has a smaller value than the actual transfer function $H(z)$. Since it is possible for the smaller value of the variance of the effective channel transfer function $\Delta H(z)/M(z)$ to lower the ratio of the eigenvalues of the channel output signals, the convergence speed of the filter is therefore improved, which in turn improves the performance of the adaptive equalizer that employs the LMS convergence algorithm.

**Claims**

1. A digital communication system having a transmitter (10) for transmitting a digitally encoded television signal (t(n)) and a reference signal (v(n)) via a transmission channel (20) and a receiver (30) including an adaptive equalizer (31) employing a Least Mean Squared algorithm, characterized in that said transmitter (10) comprises:
   channel interface means (14) coupled to the transmission channel (20) for multiplying the digitally encoded television signal (t(n)) or the reference signal (v(n)) with the inverse of a mean transfer function of the transmission channel (20), to thereby produce a modified signal (x(n)) to be transmitted.

2. The digital communication system as recited in claim 1, wherein said channel interface means (14) includes:
   memory means (14b) for storing a set of filter coefficients defining a transfer function identical to the inverse of the mean transfer function of the transmission channel (20), wherein the mean transfer function M(z) is defined as:

$$M(z) = \frac{1}{N} \sum_{n=0}^{N-1} H_n(z)$$

   wherein N is a positive integer representing the total number of samples taken; and $H_0(z)$, $H_1(z)$,........$H_{N-1}(z)$ are measured transfer functions of the transmission channel (20); and
   filter means (14a) for filtering the digitally encoded television signal (t(n)) or the reference signal (v(n)) by using the set of filter coefficients stored in the memory means (14b) in order to provide the modified signal (x(n)) to the transmission channel (20).

**Patentansprüche**

1. Digitales Kommunikationssystem mit einem Übertrager (10) zum Übertragen eines digital kodierten Fernsehsignals (t(n)) und eines Bezugssignals (v(n)) über einen Übertragungskanal (20), und einem Empfänger (30) mit einem adaptiven Entzerrer (31), der einen kleinstes mittleres Quadrat-Algorithmus verwendet, dadurch gekennzeichnet, daß der Sender (10) aufweist:
   ein mit dem Übertragungskanal (20) verbundenes Kanalschnittstellenmittel (14) zum Multiplizieren des digital kodierten Fernsehsignals (t(n)) oder des Bezugssignals (v(n)) mit dem Inversen einer mittleren Übertragungsfunktion des Übertragungskanals (20), um dabei ein geändertes zu übertragendes Signal (x(n)) zu erzeugen.

2. Digitales Kommunikationssystem gemäß Anspruch 1, bei welchem das Kanalschnittstellenmittel (14) aufweist:
   Speichermittel (14b) zum Speichern eines Satzes von Filterkoeffizienten, die eine Übertragungsfunktion definieren, die identisch mit der Inversen der mittleren Übertragungsfunktion des Übertragungskanals (20) ist, wobei die mittlere Übertragungsfunktion M(z) definiert ist als:

$$M(z) = \frac{1}{N} \sum_{n=0}^{N-1} H_n(z)$$

   wobei N eine positive ganze Zahl, die die Gesamtzahl genommener Proben darstellt; und $H_0(z)$, $H_1(z)$,......$H_{N-1}(z)$ gemessene Übertragungsfunktionen des Übertragungskanals (20) sind; und
   Filtermittel (14a) zum Filtern des digital kodierten Fernsehsignals (v(n)) oder des Bezugssignals (v(n)) durch Verwendung des in den Speichermitteln (14b) gespeicherten Satzes von Filterkoeffizienten, um das geänderte Signal (x(n)) zu dem Übertragungskanal (20) zu liefern.

**Revendications**

1. Système de communications numériques comportant un émetteur (10) pour émettre un signal de télévision codé de façon numérique (t(n)) et un signal de référence (v(n)), par l'intermédiaire d'un canal de transmission (20) et un récepteur (30) comportant un égaliseur adaptatif (31) utilisant un algorithme aux moindres carrés moyens, caractérisé en ce que ledit émetteur (10) comprend :
   des moyens d'interface de canal (14) couplés au canal de transmission (20) pour multiplier le signal de télévision codé de façon numérique (t(n)) ou le signal de référence (v(n)) par l'inverse d'une fonction de transfert moyenne du canal de transmission (20), de façon à produire ainsi un signal modifié (x(n)) destiné à être transmis.

2. Système de communication numérique selon la revendication 1, dans lequel lesdits moyens d'interface de canal (14) comportent :
   des moyens à mémoire (14b) pour stocker un ensemble de coefficients de filtre définissant une fonction de transfert identique à l'inverse de la fonction de transfert moyenne du canal de transmission (20), dans lequel la fonction de transfert moyenne M(z) est définie par :

$$M(z) = \frac{1}{N} \sum_{n=0}^{n-1} H_n(z)$$

où N est un entier positif représentant le nombre total d'échantillon pris ; et $H_0(z)$, $H_1(z)$, ........ $H_{N-1}(z)$ sont des fonctions de transfert mesurées du canal de transmission (20) ; et
   des moyens de filtre (14a) pour filtrer le signal de télévision codé de façon numérique (t(n)) ou le signal de référence (v(n)) en utilisant l'ensemble de coefficients de filtre stockés dans les moyens à mémoire (14b) pour fournir le signal modifié (x(n)) au canal de transmission (20) .